# EUROPÄISCHE PATENTANMELDUNG

(11) **EP 1 418 190 A1**
(43) Veröffentlichungstag der Anmeldung: **12.05.2004**
(21) Anmeldenummer: 03025164.9
(22) Anmeldetag: 04.11.2003
(51) Int. Cl.: C08G 2/38

(54) **Polyoxymethylen-Copolymere, deren Herstellung und Verwendung**

(30) Priorität: 05.11.2002 DE 10251332
(71) Anmelder: Ticona GmbH, 65451 Kelsterbach (DE)
(72) Erfinder: Mück, Karl-Friedrich, Dr., 65207 Wiesbaden (DE); Kurz, Klaus, Dr., 65451 Kelsterbach (DE); Hoffmockel, Michael, Dr., 65527 Niedernhausen (DE)

(57) **Zusammenfassung**

Polyoxymethylen-Copolymere, deren Herstellung und Verwendung

Beschrieben werden Copolymere enthaltend Blöcke der wiederkehrenden Struktureinheiten der Formeln I und Blöcke der Struktureinheiten II

[-O-CH₂-]ₓ (I),

[-O-R¹-] (II),

worin R¹ ein zweiwertiger Rest ist, der abgeleitet ist von einem hydroxylterminierten aliphatischen oder cycloaliphatischen Oligomeren oder Polymeren, das gegebenenfalls Ether- und/oder Carbonyloxygruppen in der Kette aufweist, und x eine ganz Zahl von mindestens 10 darstellt.

Die Copolymeren lassen sich zur Herstellung von Formteilen einsetzen.

## Beschreibung

Die vorliegende Erfindung betrifft neue Polyoxymethylen-Copolymere sowie deren Herstellung und Verwendung, insbesondere als Formmasse für Spritzguss und Extrusion zur Herstellung von Formkörpern jeglicher Art.

Polyoxymethylen (nachstehend auch als "POM" bezeichnet) ist ein Hochleistungspolymer mit guten mechanischen Eigenschaften. Allerdings lässt seine Zähigkeit für bestimmte Anwendungen zu wünschen übrig, weshalb man POM in manchen Anwendungen Schlagzäh-Modifikatoren zusetzt. Beispiele dafür sind elastomere Polyurethane.

Es hat bereits Versuche gegeben, die Schlagzähigkeit von POM durch den gezielten Einbau von Cokomponenten zu beeinflussen. Diese Versuche sind jedoch bislang erfolglos geblieben.

Es wurde jetzt ein Verfahren gefunden, mit dem der Einbau von ausgewählten Cokomponenten in das POM möglich wird und das zu schlagzäh-modifizierten Block-Copolymeren führt.

Die Erfindung betrifft Copolymere enthaltend Polyoxymethylen-Blöcke der wiederkehrenden Struktureinheiten der Formel I und Blöcke enthaltend Struktureinheiten der Formeln II

[-O-CH₂-]ₓ (I), [-O-R¹-] (II),

worin R¹ ein zweiwertiger Rest ist, der abgeleitet ist von einem hydroxyl-terminierten aliphatischen oder cycloaliphatischen Oligomeren oder Polymeren, das gegebenenfalls Ether- und/oder Carbonyloxygruppen in der Kette aufweist, und
x eine ganz Zahl von mindestens 10 darstellt.

Die erfindungsgemäßen Copolymere weisen Blöcke aus Polyoxymethylen-homo- oder -copolymerisaten und Blöcke der Formel II auf.

Der Anteil der Blöcke aus Polyoxymethylen-homo- oder -copolymerisaten im erfindungsgemäßen Copolymeren beträgt üblicherweise 70 bis 99 Gew. % , vorzugsweise 80 bis 95 Gew. %, und der Anteil an wiederkehrenden Struktureinheiten der Formel II beträgt üblicherweise 1 bis 30 Gew. %, vorzugsweise 5 bis 20 Gew. %, bezogen auf das Copolymere.

Bei den Polyoxymethylen-Blöcken ("POM-Blöcken") handelt es sich im Allgemeinen um unverzweigte lineare Blöcke, die in der Regel mindestens 80 Gew. %, vorzugsweise mindestens 90 Gew. %, Oxymethyleneinheiten (-CH₂-O-) enthalten.

Die Molekulargewichte der POM-Blöcke in den erfindungsgemäßen Copolymeren können innerhalb weiter Bereiche schwanken. Typischerweise bewegt sich x im Bereich von 500 bis 10.000, vorzugsweise von 1.500 bis 5.000.

Der Begriff Polyoxymethylen-Blöcke umfasst dabei sowohl Blöcke, die von Homopolymeren des Formaldehyds oder seiner cyclischen Oligomeren, wie des Trioxans oder Tetroxans, abgeleitet sind, als auch Blöcke, die von copolymeren Komponenten abgeleitet sind.

Bei Blöcken, die von copolymeren Komponenten abgeleitet sind, handelt es sich um solche Polymerkomponenten, die sich von Formaldehyd oder seinen cyclischen Oligomeren, insbesondere von Trioxan, und von cyclischen Ethern, cyclischen Acetalen und/oder linearen Polyacetalen ableiten. Diese Blöcke sind am Ende eines Blockcopolymeren angeordnet und/oder sind zwischen Blöcken der Formel II eingebaut.

Die Herstellung derartiger POM-Homo- oder Copolymerblöcke ist dem Fachmann an sich bekannt und in der Literatur beschrieben.

Die Homopolymerblöcke leiten sich im allgemeinen durch Polymerisation von Formaldehyd oder Trioxan ab, vorzugsweise in der Gegenwart von geeigneten Katalysatoren.

In den erfindungsgemäßen Blockcopolymeren werden Copolymerblöcke bevorzugt, insbesondere solche, die neben den wiederkehrenden Einheiten -CH₂-O- noch bis zu 50, vorzugsweise von 0,1 bis 20 und insbesondere 0,5 bis 10 Mol- %, bezogen auf den Copolymerblock, an Cokomponenten aufweisen, die sich beispielsweise ableiten von Ethylenoxid, 1,2-Propylenoxid, 1,2-Butylenoxid, 1,3-Butylenoxid, 1,3-Dioxan, 1,3-Dioxolan und 1,3-Dioxepan.

Besonders bevorzugt werden Block-Copolymere, in welchen Polyoxymethylen-Blöcke mit 99,5 - 95 Mol-% wiederkehrende Struktureinheiten der Formel I, vorzugsweise abgeleitet von Trioxan, und 0,5 bis 5 mol-% wiederkehrende Struktureinheiten abgeleitet von einem der vorgenannten Comonomeren vorkommen.

Bevorzugt werden Copolymere, worin die Polyoxymethylen-Blöcke neben den wiederkehrenden Struktureinheiten der Formel I zusätzlich wiederkehrende Struktureinheiten der Formel III aufweisen

-(C_{y}H_{2y}-O-)_{z} (III),

worin y eine ganze Zahl von 2 bis 4 ist und z eine ganze Zahl von 1 bis 3 bedeutet.

Als POM-Blöcke ebenfalls geeignet sind wiederkehrende Struktureinheiten, die beispielsweise durch Umsetzung von Trioxan, einem der vorstehend beschriebenen cyclischen Ether und mit einem dritten Monomeren, vorzugsweise einer bifunktionellen Verbindung der Formel R²-CH₂-Z-CH₂-R^{2'}, worin R² und R^{2'} unabhängig voneinander Reste der Formeln IVa, IVb oder IVc bedeuten 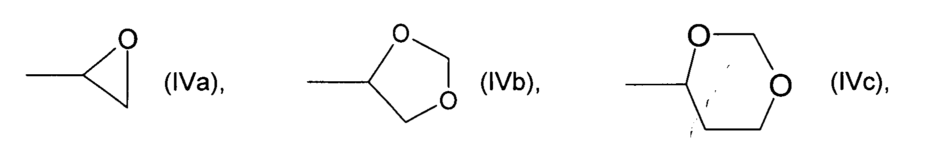 wobei Z eine chemische Bindung, -O- oder -O-R³-O- (R³ = C₂- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1, sowie Diether aus 2 Mol Glycidylverbindung und 1 Mol eines aliphatischen Diols mit 2 bis 8 C-Atomen, wie beispielsweise die Diglycidylether von Ethylenglykol, 1,4-Butandiol, 1,3-Butandiol, Cyclobutan-1,3-diol, 1,2-Propandiol und Cyclohexan-1,4-diol, oder Diglycerindiformal um nur einige Beispiele zu nennen.

Neben den wiederkehrenden Struktureinheiten der Formel I und gegebenenfalls weiteren Cokomponenten der POM-Blöcke enthalten die erfindungsgemäßen Block-Copolymeren wiederkehrende Struktureinheiten der oben definierten Formel II, die kovalent mit den POM-Blöcken verbunden sind.

Wiederkehrende Struktureinheiten der Formel II leiten sich ganz allgemein von hydroxyl-terminierten aliphatischen oder cycloaliphatischen Oligomeren oder Polymeren ab, die gegebenenfalls Ether- und/oder Carbonyloxygruppen in der Kette aufweisen.

Dabei kann es sich um zweiwertige geradkettige oder verzweigte aliphatische oligomere oder polymere Kohlenwasserstoffreste handeln, die vorzugsweise ethylenisch ungesättigte Bindungen aufweisen, wie von hydroxy-terminiertem Polybutadien abgeleitete Reste. Es kann sich aber auch um aliphatische und/oder cycloaliphatische Polyether-Oligomere oder Polyether-Polymere handeln oder um aliphatische und/oder cycloaliphatische Polyester-Oligomere oder Polyester-Polymere, die mit Hydroxylgruppen terminiert sind.

Unter dem Begriff "Oligomere" sind im Rahmen dieser Beschreibung Polymere zu verstehen, die fünf bis zehn an aufeinanderfolgenden wiederkehrenden Strukturelementen, beispielsweise Ethylenglykol-Einheiten, aufweisen. Polymere mit mehr als zehn aufeinanderfolgenden Strukturelementen werden im Rahmen dieser Beschreibung als "Polymere" bezeichnet.

Ohne an eine Theorie gebunden zu sein wird angenommen, dass diese Oligomeren oder Polymeren über Kettenübertragungsreaktionen in die POM-Blöcke eingebaut werden.

Diese Oligomeren oder Polymeren können unsubstituiert oder mit zusätzlichen aliphatischen und/oder cycloaliphatischen Resten substituiert sein.

Beispiele für Substituenten sind Alkylgruppen mit ein bis sechs Kohlenstoffatomen oder Cycloalkylgruppen mit fünf- bis sechs Ringkohlenstoffatomen.

Beispiele für Oligomere oder Polymere, die den Blöcken der Formel II zugrunde liegen, sind Polyalkylenether, wie Polyethylenglykol, Polypropylenglykol, Polyethylen-propylenglykole oder Polytetrahydrofuran; sowie hydroxyl-terminiertes Polybutadien, Bevorzugt werden Copolymere enthaltend die wiederkehrenden Struktureinheiten der Formeln I, II und gegebenenfalls III, worin R¹ ein Rest -(CₘH₂ₘ-O-)ᵣ- CₘH₂ₘ- ist, m eine ganze Zahl von 2 bis 4 ist und r eine ganze Zahl von 20 bis 1.500, vorzugsweise von 50 bis 1.000, darstellt.

Ganz besonders bevorzugt werden Copolymere, worin m 2 ist.

Die Herstellung der erfindungsgemäßen Copolymeren beruht auf der Erkenntnis, dass der Einbau der Blöcke der wiederkehrenden Struktureinheiten möglich wird, wenn das entstehende POM-Homo- oder -Copolymere während der Polymerisation in Lösung oder zumindest in einem solchen feinverteilten Zustand gehalten werden kann, dass der Einbau dieser Blöcke möglich wird.

Unter an sich üblichen Polymerisationsbedingungen, beispielsweise bei 70°C und Normaldruck, fällt das entstehende POM-Polymere aus der Reaktionslösung aus und ein gleichmäßiger Einbau weiterer Komponenten durch Polymerisation ist stark behindert.

Die Massepolymerisation von Oxymethylenpolymeren bei erhöhtem Druck und erhöhter Temperatur ist bereits beschrieben worden, beispielsweise in der EP-A-080,656 oder in der DE-A-44 31 575. Diese Dokumente geben aber keinen Hinweis auf die Herstellung von Block-Copolymerisaten.

Die Erfindung betrifft daher auch ein Verfahren zur Herstellung der oben definierten Copolymeren enthaltend die wiederkehrenden Struktureinheiten der Formeln I und II, umfassend die Maßnahmen:
i) Vorlage von -O-CH₂- Einheiten bildenden Monomeren zusammen mit Monomeren der Formel V

   HO-R¹-OH (V),

   worin R¹ die weiter oben definierte Bedeutung aufweist, zusammen mit einem für die Polymerisation der -CH₂-O-Einheiten bildenden Monomeren üblichen Katalysatoren gegebenenfalls zusammen mit einem Lösungsmittel und/oder mit Reglern, und
ii) Durchführung der Copolymerisation bei einer Temperatur zwischen 120 und 300°C und bei einem Druck zwischen 2 und 500 bar.

Beispiele für -O-CH₂- Einheiten bildende Monomere sowie für Monomere der Formel V sind bereits weiter oben aufgeführt.

Bei der Massepolymerisation liegt die Polymerisationsmischung vorzugsweise in fluider Form vor; anstelle davon kann auch in inerten Lösungsmitteln gearbeitet werden. Beispiele dafür sind aliphatische, cycloaliphatische, halogenierte aliphatische Kohlenwasserstoffe oder Glykolether.

Das Molekulargewicht des Blockcopolymeren kann gegebenenfalls durch die bei der POM-Herstellung üblichen Regler und/oder durch die Auswahl des Molekulargewichts der Cokomponente der Formel V eingestellt werden.

Beispiele für Regler kommen Acetale bzw. Formale einwertiger Alkohole, die Alkohole selbst bzw. als Kettenüberträger fungierende geringe Mengen an Wasser in Frage. Die Regler werden üblicherweise in Mengen von bis zu 10.000 ppm, vorzugsweise von 10 bis 3.000 ppm, eingesetzt.

Als Katalysatoren bzw. Initiatoren kommen die üblicherweise bei der Herstellung von POM-Polymeren eingesetzten kationischen Starter in Frage.

Beispiele dafür sind Protonensäuren, wie fluorierte oder chlorierte Alkyl- und Arylsulfonsäuren, z.B. Trifluormethansulfonsäure, Trifluormethansulfonsäureanhydrid, oder Heteropolysäuren, wie Wolframatophosphorsäuren, oder LewisSäuren, wie z.B. Zinntetrachlorid, Arsenpentafluorid, Phosphorsäurepentafluorid und Bortrifluorid, sowie deren Komplexverbindungen und salzartige Verbindungen, wie z.B. Bortrifluorid-Etherate und Triphenylmethylhexafluorophosphat.

Die Katalysatoren bzw. Initiatoren werden üblicherweise in Mengen von 0,01 bis 1.000 ppm, vorzugsweise von 0,03 bis 10 ppm, eingesetzt.

Erfindungsgemäß sind Druck und Temperatur in der Polymerisationszone so zu wählen, dass Monomere und Polymerisat in homogener bzw. fein-disperser Verteilung vorliegen, vorzugsweise vollständig ineinander gelöst oder zumindest so feinverteilt, dass eine Dispersion vorliegt, bei der ein gleichmäßiger Einbau der Cokomponenten noch möglich ist. Dieses ist bei den oben angegebenen Werten für den Reaktionsdruck bzw. die Reaktionstemperatur der Fall.

Die Copolymerisation erfolgt vorzugsweise bei Temperaturen von 130 bis 200 °C und bei Drucken von 5 bis 50 bar.

Die Polymerisationsdauer kann in weiten Bereichen schwanken und bewegt sich typischerweise im Bereich von 0,1 bis 20 Minuten. Vorzugsweise beträgt die Polymerisationsdauer 0,4 bis 5 Minuten.

Die Copolymerisation kann in den für die Herstellung von POM-Polymeren bekannten Reaktoren erfolgen. Typischerweise setzt man mit statischen Mischer ausgelegte Rohrreaktoren ein, die temperierbar und druckfest ausgelegt sind.

Nach der Polymerisation wird die Polymerisationsmischung auf an sich übliche Weise weiterbehandelt. An die Polymerisation schließt sich üblicherweise eine Desaktivierung, Entgasung und Konfektionierung der Mischung an.

Die Desaktivierung erfolgt durch Zugabe von Desaktivatoren zur Reaktionsmischung. Beispiele dafür sind Ammoniak, Amine, Alkohole oder basisch reagierende Salze.

In einer besonderen Ausführungsform des erfindungsgemäßen Verfahrens wird das erhaltene Block-Copolymer nach der Herstellung mit Wasser und/oder einem wasserlöslichen Alkohol, wie Methanol, zwischen 30 und 100°C, vorzugsweise zwischen 50 und 80°C, behandelt. Dadurch werden in der Reaktionsmischung physikalisch gebundene Monomerreste und Block-Komponenten extrahiert und die mechanischen Eigenschaften von Formteilen verbessert.

Diese Schritte sind dem Fachmann an sich bekannt und beispielsweise in der EP-A-080656 beschrieben.

Die bevorzugten POM-Block-Copolymere haben Schmelzpunkte von mindestens 150°C und Molekulargewichte (Zahlenmittelwert) Mₙ im Bereich von 50.000 bis 300.000, vorzugsweise von 70.000 bis 200.000.

Endgruppenstabilisierte POM-Polymerisate, die an den Kettenenden Alkoxygruppen, Formiatgruppen, Hydroxyalkylengruppen oder eine Kombination von zwei oder mehreren dieser Reste aufweisen, werden besonders bevorzugt.

Die eingesetzten POM-Block-Copolymere haben im allgemeinen einen Schmelzindex (MVR Wert 190/2,16, ISO 1133) von 1 bis 50 cm³/10 min.

Die erfindungsgemäßen POM-Block-Copolymeren lassen sich für Formteile jeglicher Art, insbesondere für die Verarbeitung mittels Spritzguss bzw. Extruder, einsetzen.

Die Erfindung betrifft daher auch die Verwendung der Block-Copolymeren für die oben genannten Zwecke.

Da die Block-Copolymeren bereits flexibilisierende Komponenten der Formel II aufweisen, kann auf den Einsatz von Schlagzähmodifikatoren, wie von elastomeren Polyurethanen, üblicherweise verzichtet werden. In Abhängigkeit von der ins Auge gefassten Anwendung kann der Zusatz solcher Komponenten im Einzelfall allerdings erwünscht sein.

Die erfindungsgemäßen Block-Copolymeren können weitere an sich bekannte Zusatzstoffe enthalten, die bereits bei der oder im Anschluss an die Herstellung der Block-Copolymeren zugesetzt werden können.

Beispiele für Zusatzstoffe sind Verarbeitungshilfen, wie Antioxidantien, Säurefänger, Formaldehydfänger, UV-Stabilisatoren, Wärme-Stabilisatoren, Haftvermittler, Gleitmittel, Nukleierungsmittel oder Entformungsmittel, Füllstoffe, Verstärkungsmaterialien oder Antistatika; oder Zusätze, die der Formmasse eine gewünschte Eigenschaft verleihen, wie Farbstoffe und/oder Pigmente und/oder elektrische Leitfähigkeit vermittelnde Zusätze; sowie Mischungen dieser Zusätze, ohne jedoch den Umfang auf die genannten Beispiele zu beschränken.

Die Verarbeitung der erfindungsgemäßen Block-Copolymeren kann durch Vermischen der feinteiligen, beispielsweise pulverförmigen oder granulierten Komponenten und anschließende thermoplastische Verarbeitung erfolgen oder durch Mischen der Komponenten in dafür geeigneten beheizbaren Mischaggregaten. Geeignete Mischaggregate und -verfahren sind beispielsweise beschrieben in: Saechtling, Kunststoff-Taschenbuch, Hanser Verlag, 27. Auflage 1998, auf den Seiten 202 bis 217, worauf Bezug genommen wird.

Die vorteilhaften Verarbeitungstemperaturen liegen üblicherweise im Bereich von 180 bis 230°C, vorteilhaft zwischen 190 bis 210°C.

Die nachfolgenden Beispiele erläutern die Erfindung ohne diese zu begrenzen. Mengenangaben erfolgen dabei, sofern nichts anderes angegeben ist, immer in Gewichtsteilen.

### Allgemeine Arbeitsvorschrift

Flüssiges Trioxan von 80°C wurde mit Dioxolan, dem Methylal zugesetzt worden war, sowie mit Polyethylenglykol (PEG) mit einem mittleren Molekulargewicht von 35.000 (Zahlenmittel) in einem Rohrreaktor unter Zusatz von Trifluormethansulfonsäure als Initiator copolymerisiert. Die Copolymerisation wurde bei 155°C und bei einem Druck von 25 bar durchgeführt.

Nach 1,5 Minuten wurde die Copolymerisation durch Zugabe von Triethylamin abgebrochen und es wurde ein Abbau der instabilen Kettenenden bei 185°C und während 15 Minuten vorgenommen. Durch Heißabschlag am Reaktorausgang unter weitgehender Verdampfung der Restmonomeren entstand ein poröses Granulat.

Monomere, deren Mengen und Eigenschaften der erhaltenen Copolymeren sind in Tabelle 1 dargestellt.

Das Produkt wurde mit Methanol gewaschen, um die anhaftenden Restmonomeren zu entfernen. Die so extrahierten Produkte wurden durch Extrusion zu Formkörpern verarbeitet.

In einem alternativen Extraktionsschritt wurde das Produkt nach Mahlung auf einen Korndurchmesser von 500 µm mit Methanol bei 60°C für 20 Minuten extrahiert. Das Methanol wurde über eine Zentrifuge abgetrennt und das Polymerisat im Extruder entgast und extrudiert

**Tabelle 1**

| Zusammensetzung der hergestellten Copolymeren | | | | | |
|---|---|---|---|---|---|
| Beispiel Nr. | Trioxan (Gew. %) | Dioxolan (Gew.%) | PEG in Reakt.mischung (Gew. %) | Initiator-konzentration (ppm) | MVR (cm³/10 min) |
| 1.1 | 91,6 | 3,4 | 5 | 5 | 4,88 |
| 1.2 | 91,6 | 3,4 | 5 | 6 | 5,03 |
| 1.3¹⁾ | 91,6 | 3,4 | 5 | 6 | 11,93 |
| 2 | 86,6 | 3,4 | 10 | 8 | 32 |

| | | | | | |
|---|---|---|---|---|---|
| 1) wurde durch Heißextraktion mit Methanol aufgearbeitet | | | | | |

Der PEG Gehalt der erhaltenen Block-Copolymeren wurde durch ¹H-NMR-Spektroskopie bestimmt. Die Probe wurde in Hexafluorisopropanol (HFiP-D₂) gelöst und bei 310 K gemessen.

Die mechanischen Eigenschaften der aus den erfindungsgemäßen Block-Copolymeren hergestellten Formkörper wurden wie folgt bestimmt:
Bruchspannung gemäß ISO 527-2
Streckspannung gemäß ISO 527-2
Kerbschlagzähigkeit gemäß EN ISO 179-1
Bruchdehnung gemäß ISO 527-2
Streckdehnung gemäß ISO 527-2
E-Modul gemäß ISO 527-2
Dichte gemäß EN ISO 1183-1
Volumenschmelzindex MVR 190/2, 16 von 8 cm³/10 min gemäß EN USO 1133.

Die Prüfergebnisse sind in der nachfolgenden Tabelle 2 aufgelistet.

**Tabelle 2**

| Eigenschaften von POM-Copolymeren und Vergleichsbeispiele | | | | | | | | |
|---|---|---|---|---|---|---|---|---|
| Beispiel Nr. | PEG-Gehalt³⁾ | Bruchspannung (MPa) | Streckspannung (MPa) | Kerbschlagzähigkeit (kJ/m²) | Bruchdehnung (%) | Streckdehnung (%) | E-Modul (MPa) | Dichte (g/l) |
| 1.1 | 4,28 | 50,95 | 59,1 | 9,55 | 39,67 13,67 | | 2027 | 1,393 |
| 1.3 | 2,69 | 58,21 | 61,8 | 10,34 | 26,71 | 12,03 | 2434 | n.d. |
| 2 | 10,81 | 46,82 | 53,5 | 6,5 | 37,19 | 10,57 | 1958 | 1,385 |
| V1¹⁾ | - | 52,8 | 64,4 | 7,12 | 35,7 | 10,5 | 2650 | 1,41 |
| V2²⁾ | - | n.d. | 53 | 12 | 32 | 9 | 2100 | 1,39 |

| | | | | | | | | |
|---|---|---|---|---|---|---|---|---|
| ¹⁾ handelsübliches POM; Hostaform^{R} C9021 | | | | | | | | |
| ²⁾ handelsübliche schlagzäh-modifiziertes POM; Hostaform^{R} S9063 | | | | | | | | |
| ³⁾ bestimmt durch ¹H-NMR | | | | | | | | |

## Patentansprüche

1. Copolymere enthaltend Polyoxymethylen-Blöcke der wiederkehrenden Struktureinheiten der Formel I und Blöcke enthaltend Struktureinheiten der Formeln II
[-O-CH₂-]ₓ (I), [-O-R¹-] (II),
worin R¹ ein zweiwertiger Rest ist, der abgeleitet ist von einem hydroxyl-terminierten aliphatischen oder cycloaliphatischen Oligomeren oder Polymeren, das gegebenenfalls Ether- und/oder Carbonyloxygruppen in der Kette aufweist, und
x eine ganz Zahl von mindestens 10 darstellt.

2. Copolymere nach Anspruch 1, **dadurch gekennzeichnet, dass** x eine ganze Zahl von 500 bis 10.000, vorzugsweise von 1.500 bis 5.000, ist.

3. Copolymere nach Anspruch 1, **dadurch gekennzeichnet, dass** deren Polyoxymethylen-Blöcke neben den wiederkehrenden Struktureinheiten der Formel I zusätzlich wiederkehrende Struktureinheiten der Formel III aufweisen
-(CyH_{2y}-O-)_{z} (III),
worin y eine ganze Zahl von 2 bis 4 ist und z eine ganze Zahl von 1 bis 3 bedeutet.

4. Copolymere nach Anspruch 1, **dadurch gekennzeichnet, dass** R¹ ein Rest -(CₘH₂ₘ-O-)ᵣ- CₘH₂ₘ- ist, m eine ganze Zahl von 2 bis 4 ist und r eine ganze Zahl von 20 bis 1.500, vorzugsweise von 50 bis 1.000, darstellt.

5. Copolymere nach Anspruch 4, **dadurch gekennzeichnet, dass** m 2 ist.

6. Verfahren zur Herstellung des Copolymeren nach Anspruch 1 umfassend die Maßnahmen:
i) Vorlage von -O-CH₂- Einheiten bildenden Monomeren zusammen mit Monomeren der Formel V
HO-R¹-OH (V),
worin R¹ die in Anspruch 1 definierte Bedeutung aufweist, zusammen mit einem für die Polymerisation der -O-CH₂-Einheiten bildenden Monomeren üblichen Katalysatoren gegebenenfalls zusammen mit einem Lösungsmittel und/oder mit Reglern, und
ii) Durchführung der Copolymerisation bei einer Temperatur zwischen 120 und 300°C und bei einem Druck zwischen 2 und 500 bar.

7. Verfahren nach Anspruch 6, **dadurch gekennzeichnet, dass** das erhaltene Block-Copolymer nach der Herstellung mit Wasser und/oder einem wasserlöslichen Alkohol zwischen 30 und 100°C, vorzugsweise zwischen 50 und 80°C, behandelt wird.

8. Verwendung der Copolymeren nach Anspruch 1 zur Herstellung von Formteilen.
